# FASCICULE DE BREVET EUROPEEN

(11) **EP 2 354 582 B1**
(45) Date de publication et mention de la délivrance du brevet: **01.03.2017**
(21) Numéro de dépôt: 10191694.8
(22) Date de dépôt: 18.11.2010
(51) Int. Cl.: F16D 13/75, F16D 23/12

(54) **Mécanisme de commande pour un système d'embrayage à friction comportant un dispositif de rattrapage de jeu**
Betätigungsvorrichtung mit Verschleissausgleich für eine Reibungskupplung
Actuator for a friction clutch with a wear adjustment system

(30) Priorité: 10.02.2010 FR 1050918
(43) Date de publication de la demande: 10.08.2011
(73) Titulaire: Valeo Embrayages, 80009 Amiens Cedex 2 (FR)
(72) Inventeur: Delevallee, Jean-Louis, 80090 Amiens (FR); Maurel, Hervé, 80000 Amiens (FR)
(74) Mandataire: Cardon, Nicolas

(56) Documents cités:
- EP-A1- 0 699 844
- EP-A1- 1 703 160
- DE-A1- 2 352 183
- FR-A- 1 485 480

## Description

L'invention se rapporte à un mécanisme d'actionnement pour un système d'embrayage à friction de véhicule automobile.

L'invention se rapporte plus particulièrement à un mécanisme d'actionnement pour un système d'embrayage à friction de véhicule automobile qui comporte :
- une fourchette d'actionnement qui est montée pivotante autour d'un axe transversal par l'intermédiaire d'une articulation mobile longitudinalement et qui comporte deux bras de levier dont chacun présente une longueur fixe ;
- un actionneur qui est destinée à faire coulisser une butée d'actionnement du système d'embrayage par l'intermédiaire de la fourchette d'actionnement ;
- un dispositif de rattrapage de jeu longitudinal de l'embrayage, notamment de l'usure de garnitures de friction, qui agit sur la position longitudinale de l'articulation de la fourchette d'actionnement par l'intermédiaire d'un organe de réglage monté rotatif sur un support fixe, pour rattraper le jeu longitudinal.

Les systèmes d'embrayage à friction comportent au moins un disque de friction muni de garniture sur ses deux faces. Le disque de friction est susceptible d'être serré contre un plateau de réaction par un plateau de pression coulissant. En fonction de la position du plateau de pression, le système d'embrayage est ainsi susceptible d'occuper un état embrayé ou un état débrayée.

Les systèmes d'embrayage peuvent être de type dit "normalement ouvert". Dans ce cas, le système d'embrayage comporte un élément qui rappelle élastiquement le plateau de pression vers une position de repos correspondant à l'état débrayé du système d'embrayage.

Les systèmes d'embrayage peuvent aussi être de type dit "normalement fermé". Dans ce cas, le système d'embrayage comporte un élément, tel qu'un diaphragme, qui rappelle élastiquement le plateau de pression une position de repos correspondant à l'état embrayé du système d'embrayage.

Dans les deux cas, le plateau de pression est mobile entre une position extrême de repos vers laquelle il est rappelé élastiquement, et une position extrême de contrainte vers laquelle il est poussé à l'encontre de la force de rappel élastique par une butée d'actionnement coulissante longitudinalement le long d'une course d'embrayage.

Ce type de système d'embrayage est généralement commandé par un mécanisme d'actionnement équipé d'un actionneur qui comporte un moto-réducteur électrique qui entraîne en translation un élément menant, tel par exemple qu'une tige de poussée, agissant sur la butée d'actionnement par l'intermédiaire d'un levier. Le levier est généralement appelé "fourchette". La tige de poussée est coulissante le long d'une course d'actionnement pour déplacer le plateau de pression le long de sa course d'embrayage.

Lorsque l'actionneur est du type à compensation d'effort, il comprend en général un ressort de compensation qui agit sur une came ou une rampe inclinée solidairement en coulissement longitudinal de la tige de poussée pour solliciter la tige de poussée dans le sens correspondant à la position de contrainte du plateau de pression. Le ressort de compensation et la rampe inclinée sont conçus de manière que l'effort exercé par le ressort de compensation sur la tige de poussée équilibre approximativement l'effort de rappel élastique du diaphragme, de sorte que l'effort fourni par le moto-réducteur pour l'actionnement de l'embrayage est réduit à une valeur minimale.

La course d'embrayage "d0" que doit parcourir le plateau de pression entre l'état embrayé et l'état débrayé du système d'embrayage est définie par rapport à la position du plateau de pression dans l'état embrayé du système d'embrayage.

Or, l'usure des garnitures de friction de l'embrayage se traduit par un décalage de la position, de repos ou de contrainte, du plateau de pression correspondant à l'état embrayé du système d'embrayage afin de compenser la perte d'épaisseur longitudinale du disque de friction. La position du plateau de pression dans l'état débrayé n'étant pas décalée dans le même temps, ceci entraîne une distance de déplacement plus longue de la butée d'actionnement, et donc de la tige de poussée, et, par conséquent, une modification de la course d'actionnement de la tige de poussée.

Le système de compensation d'effort se trouve alors déséquilibré, ce qui implique une modification plus ou moins importante, selon les réalisations, de l'effort d'actionnement que doit fournir l'actionneur pour déplacer la butée d'actionnement à l'encontre du diaphragme.

On a déjà proposé de nombreux dispositifs de rattrapage d'usure qui sont en général intégrés à l'embrayage pour compenser l'usure des garnitures de friction au fur et à mesure qu'elle se produit, de sorte que cette usure n'a plus d'effet sur la position de la butée d'actionnement et sur la course d'actionnement de la tige de poussée. Plus particulièrement, le dispositif de rattrapage a pour fonction de décaler la position du plateau de pression en état débrayé dans la même direction et de la même distance que le décalage de la position du plateau de pression en état embrayé.

Ces dispositifs connus sont toutefois relativement complexes et leur fonctionnement se révèle souvent peu précis et peu fiable en pratique.

On connaît aussi, notamment par le document FR-A-2 901 587, un dispositif de rattrapage d'usure 20 qui est représenté schématiquement à la figure 1. On a représenté de manière simplifiée par des boîtes le système d'embrayage 22, l'actionneur 24 et le dispositif de compensation d'effort 26. La course d'embrayage de la butée d'actionnement (non représentée) couvre une distance "d0".

L'actionneur 24 est équipé d'une tige coulissante de poussée 28. Le mouvement de la tige de poussée 28 est transmis à la butée d'actionnement par l'intermédiaire d'une fourchette 30 montée pivotante autour d'une articulation 32 fixe par rapport à l'actionneur 24 et par rapport au système d'embrayage 22.

Le dispositif de rattrapage d'usure 20 a pour fonction de régler la longueur de la tige de poussée 28 en fonction de l'usure des garnitures du système d'embrayage 22 de telle sorte que ce réglage de longueur compense le décalage "d1" de la course d'embrayage de la butée d'actionnement qui est dû à l'usure des garnitures.

Cependant, un tel dispositif 20 est encombrant car il est nécessaire de prévoir un espace libre relativement important pour permettre l'allongement maximal "d1" de la tige de poussée en plus de la course d'actionnement "d0". En d'autres termes, la course d'actionnement de l'extrémité libre de la tige de poussée 28 est décalée de la distance d'usure "d1", mais la distance "d0" de la course d'actionnement de la tige d'actionnement 28 reste constante.

De plus, cette augmentation de la longueur de la tige de poussée 28 se répercute, parfois en étant amplifiée, sur les éléments de la chaîne de transmission du mouvement de l'actionneur 24 jusqu'à la butée d'actionnement. La zone balayée par le débattement angulaire de la fourchette 30 est notamment décalée au fur et à mesure de l'allongement de la tige de poussée 28, ce qui requiert de prévoir un espace libre "d1" pour permettre le débattement maximal de la fourchette quel que soit le degré d'usure des garnitures.

En outre, les dispositifs de rattrapage d'usure connus ne sont pas susceptibles de permettre de rattraper les jeux de fabrication ou de montage en sus des jeux d'usure.

Il est également connu du document EP 0 699 844 A1 un mécanisme d'actionnement pour un système d'embrayage à friction automobile.

La présente invention propose un mécanisme d'actionnement du type décrit précédemment, caractérisé en ce qu'il comporte :
- une première roue libre qui est montée à rotation autour de l'organe de réglage, la première roue libre étant susceptible d'entraîner en rotation l'organe de réglage uniquement lorsqu'elle est tournée dans un premier sens d'entraînement, depuis une position angulaire initiale vers une position angulaire finale ; et
- une deuxième roue libre qui est montée à rotation autour de l'organe de réglage, la deuxième roue libre étant susceptible d'entraîner en rotation l'organe de réglage uniquement lorsqu'elle est tournée dans un deuxième sens d'entraînement opposé audit premier sens d'entraînement, depuis une position angulaire initiale vers une position angulaire finale ;
- des moyens de débrayage sélectif de chaque roue libre pour autoriser la rotation libre de l'organe de réglage dans les deux sens par rapport à ladite roue libre lorsque cette dite roue libre occupe sa position angulaire initiale.

Selon d'autres caractéristiques de l'invention :
- chaque roue libre comporte une bague périphérique et un élément de liaison avec l'organe de réglage, ledit élément de liaison étant mobile par rapport à la bague associée entre :
   -- une position de solidarisation dans laquelle la bague et l'organe de réglage sont solidaires en rotation dans le sens d'entraînement et vers laquelle l'élément de liaison est rappelé élastiquement,
   -- et une position de libération dans laquelle la bague est libre de tourner par rapport à l'organe de réglage ;
- les moyens de débrayage comportent une butée fixe par rapport au support qui maintient l'élément de liaison dans sa position de libération lorsque la bague associée occupe sa position angulaire initiale ;
- la butée est commune aux deux roues libres, la première roue libre étant rappelée élastiquement vers sa position angulaire finale, tandis que la deuxième roue libre est rappelée élastiquement vers sa position angulaire initiale ;
- l'actionneur comporte un organe de sortie qui est mobile sur un trajet qui est divisé en deux courses non chevauchantes :
   -- une première course d'actionnement qui permet d'agir sur la butée d'actionnement pour commander l'embrayage à friction, la butée d'actionnement étant rappelée élastiquement vers une position extrême de repos correspondant à une position d'origine de l'organe de sortie ;
   -- et une deuxième course de réglage qui prolonge la première course en-deçà de la position d'origine de l'organe de sortie et le long de laquelle l'actionneur commande le dispositif de rattrapage par l'intermédiaire de moyens de transmission du mouvement sans agir sur l'état de l'embrayage ;
- la deuxième course de réglage est divisée en une première portion de réglage dans un premier sens qui s'étend de la position d'origine jusqu'à une position intermédiaire de l'organe de sortie, et une deuxième portion de réglage dans un deuxième sens qui s'étend en-deçà de la position intermédiaire,
- la première roue libre est commandée en rotation vers sa position angulaire initiale à l'encontre de l'effort de rappel élastique tout le long de la deuxième course de réglage, le retour de l'organe de sortie vers sa position d'origine provoquant la rotation de la première roue libre dans le sens d'entraînement de l'organe de réglage pour faire coulisser l'articulation dans un premier sens, tandis que la deuxième roue libre est commandée en rotation vers sa position angulaire finale à l'encontre de l'effort de rappel élastique sur la deuxième portion de réglage, provoquant la rotation de la deuxième roue libre dans le sens d'entraînement de l'organe de réglage pour faire coulisser l'articulation dans un deuxième sens ;
- les moyens de transmission comportent :
   -- un premier chemin de came qui est solidaire de l'organe de sortie et qui comporte une pente ;
   -- un premier suiveur de came qui est associé au premier chemin de came, ledit suiveur de came étant susceptible de faire tourner la bague de la première roue libre en rotation vers sa position angulaire initiale à l'encontre de l'effort élastique de rappel ;
   -- un deuxième chemin de came qui est solidaire de l'organe de sortie et qui comporte une pente ;
   -- un deuxième suiveur de came qui est associé au deuxième chemin de came, le suiveur de came étant susceptible de faire tourner la bague de la deuxième roue libre en rotation vers sa position angulaire finale à l'encontre de l'effort élastique de rappel ;
- chaque suiveur de came est formé par un culbuteur.
- au moins l'une des roues libres est formée par une roue libre à rouleau ;
- au moins l'une des roues libres est formée par une roue libre à cliquet ;
- la fourchette d'actionnement est entraînée par l'actionneur par l'intermédiaire d'un pignon qui est destiné à être emboîté avec un embout de connexion mécanique de l'organe de sortie avec un jeu angulaire autour de son axe de rotation de manière que, le long de la deuxième course angulaire de réglage, l'organe de sortie tourne sans entraîner en rotation le pignon.

Le dispositif de rattrapage par coulissement de l'articulation de la fourchette d'actionnement réalisé selon les enseignements de l'invention est ainsi avantageusement très compact car la longueur de la tige de poussée n'est pas modifiée.

En outre, le fait que ce dispositif de rattrapage et le système d'embrayage soient commandés par un actionneur commun permet de diminuer encore l'encombrement et les coûts de réalisation en évitant d'avoir à implanter un deuxième actionneur dans le dispositif d'embrayage.

Par ailleurs, l'utilisation de roues libres permet un réglage rapide et efficace de la position de l'articulation de la fourchette, notamment par rapport à un dispositif de vis sans fin.

De plus, un tel dispositif de rattrapage ainsi piloté permet de rattraper non seulement les jeux dus à l'usure des garnitures mais aussi de rattraper les jeux de montage ou de fabrication.

D'autres caractéristiques et avantages de l'invention apparaîtront à la lecture de la description détaillée qui va suivre, pour la compréhension de laquelle on se reportera aux dessins annexés, parmi lesquels :
- la figure 1 est une vue schématique de côté qui représente le principe de fonctionnement d'un dispositif de rattrapage de jeu réalisé selon l'art antérieur appliqué à un système d'embrayage à friction ;
- la figure 2 est une vue en coupe axiale qui représente schématiquement un système d'embrayage à friction équipé d'un actionneur muni d'un dispositif de rattrapage de jeu réalisé selon les enseignements de l'invention ;
- la figure 3 est une vue en perspective selon un premier angle qui représente l'actionneur et le dispositif de rattrapage de jeu réalisé selon les enseignements de l'invention ;
- la figure 4 est une vue en perspective selon un deuxième angle avec section verticale longitudinale qui représente l'actionneur et le dispositif de rattrapage de jeu réalisé selon les enseignements de l'invention ;
- la figure 5 est une vue en perspective qui représente un motoréducteur de l'actionneur des figures 3 et 4 ;
- la figure 6 est une vue de perspective qui représente un pignon de l'actionneur des figures 3 et 4 ;
- la figure 7 est une vue de dessus de la figure 6 ;
- la figure 8 est une vue schématique similaire à celle de la figure 1 qui représente le principe de fonctionnement d'un dispositif de rattrapage de jeu réalisé selon les enseignements de l'invention ;
- la figure 9 est une vue de détail à plus grande échelle du dispositif de rattrapage de jeu de la figure 4 ;
- la figure 10 est une vue qui représente un développement du premier chemin de came, en haut de la figure, et du deuxième chemin de came, en bas de la figure, l'abscisse représentant l'angle de rotation de l'organe de sortie de l'actionneur, et l'ordonnée représentant la hauteur du chemin de came ;
- la figure 11 est une vue de face qui représente une deuxième roue libre du dispositif de rattrapage de jeu dans une position angulaire initiale ;
- la figure 11A est une vue de détail à plus grande échelle de la figure 11 ;
- la figure 12 est une vue de face qui représente une première roue libre du dispositif de rattrapage de jeu dans une position angulaire finale ;
- la figure 12A est une vue de détail à plus grande échelle de la figure 12 ;
- la figure 13 est une vue similaire à celle de la figure 12 dans laquelle la première roue libre occupe une position angulaire initiale ;
- la figure 13A est une vue de détail à plus grande échelle de la figure 13 ;
- les figures 14, 14A, 15 et 15A sont des vues respectivement identiques à celles des figures 13, 13A, 11, 11A ;
- la figure 16 est une vue similaire à celle de la figure 11 dans laquelle la deuxième roue libre occupe une position angulaire finale
- la figure 16A est une vue de détail à plus grande échelle de la figure 16.

Dans la description qui va suivre, des numéros de référence identiques désignent des pièces identiques ou ayant des fonctions similaires.

Dans la suite de la description et dans les revendications, on adoptera à titre non limitatif des directions longitudinale, orientée d'arrière en avant, verticale, orientée de bas en haut, et transversale, orientée de gauche à droite indiquées par le trièdre "L,V,T" des figures. La direction longitudinale est choisie comme étant parallèle à l'axe de rotation "A1" du système d'embrayage.

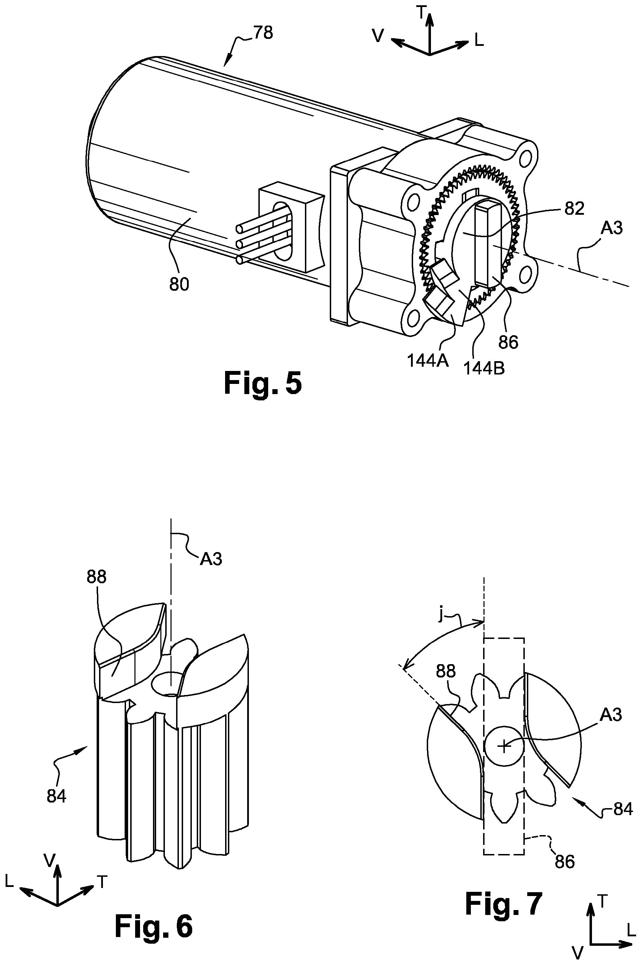

Dans la suite de la description on définit aussi un sens de rotation horaire de l'organe de sortie 82 autour de son axe de rotation "A3" selon la vue de dessus représentée à la figure 7.

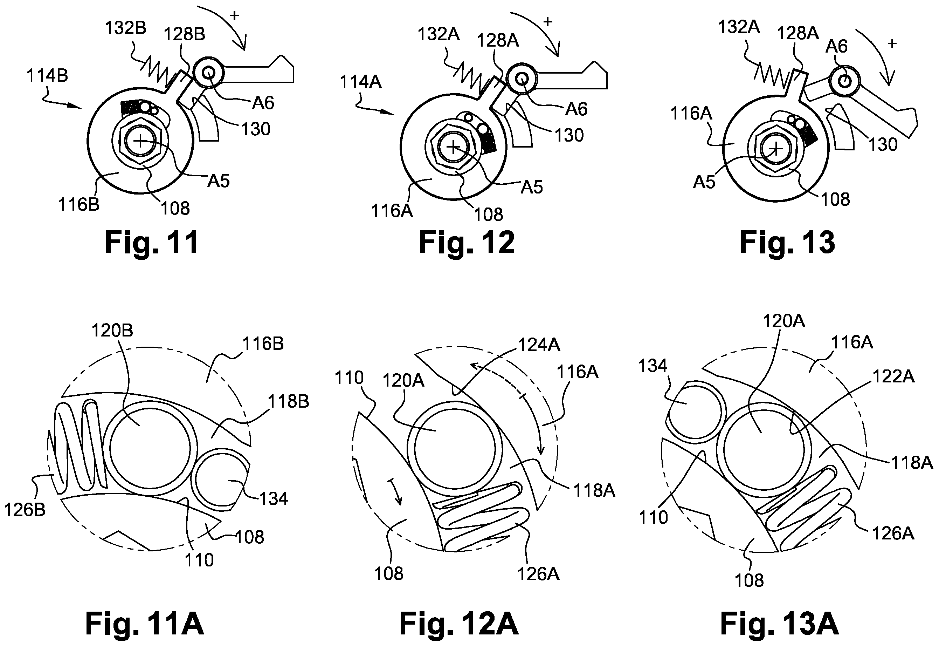

On définit un sens de rotation positif selon la flèche "+" indiquée aux figures 11 à 16 pour les bagues 116A, 116B autour de leur axe de rotation "A5", ainsi qu'un sens de rotation négatif opposé.

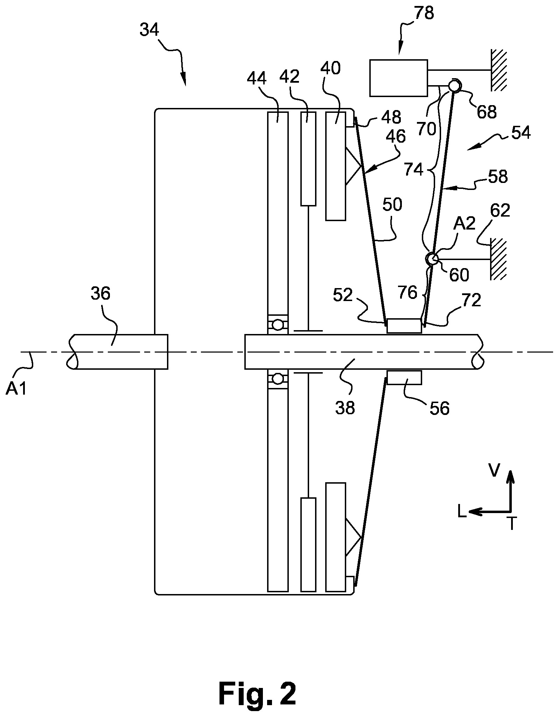

On a représenté à la figure 2, à titre d'exemple non limitatif, un système d'embrayage 34 à friction qui est destiné à accoupler un arbre moteur 36 qui est agencé longitudinalement vers l'avant avec au moins un arbre mené 38 qui est agencé vers l'arrière.

L'arbre moteur 36 et l'arbre mené 38 sont rotatifs autour d'un axe longitudinal commun de rotation "A1". L'arbre mené 38 est relié à une boîte de vitesses arrière (non représentée).

Le système d'embrayage 34 comporte des moyens d'accouplement temporaire de l'arbre mené 38 avec l'arbre moteur 36.

De manière connue, le système d'embrayage 34 comporte un plateau de pression 40 qui est destiné à être commandé entre une position extrême avant d'embrayage dans laquelle un disque de friction 42 est serré contre une face arrière d'un plateau de réaction 44 par le plateau de pression 40 pour accoupler temporairement l'arbre mené 38 avec l'arbre moteur 36, et une position extrême arrière de débrayage dans laquelle le disque de friction 42 est écarté longitudinalement à la fois du plateau de réaction 44 et du plateau de pression 40.

De manière connue, le système d'embrayage 34 comporte aussi un diaphragme 46 annulaire coaxial arrière d'actionnement du plateau de pression 40. Le diaphragme 46 comporte un anneau 48 radialement extérieur depuis lequel des rayons 50 élastiquement flexibles s'étendent radialement vers l'axe de rotation "A1" jusqu'à une extrémité intérieure libre 52.

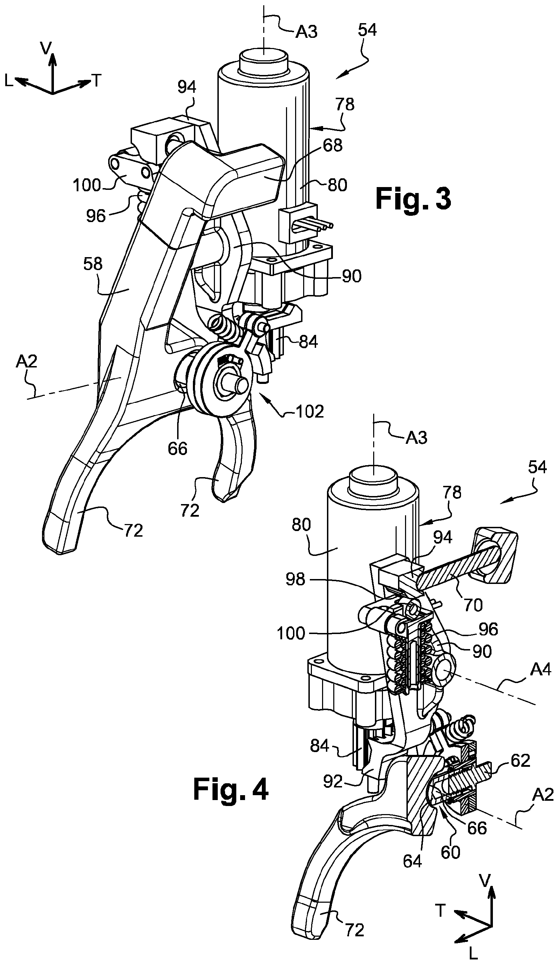

Le système d'embrayage 34 comporte un mécanisme d'actionnement 54 du plateau de pression 40 entre sa position extrême d'embrayage et sa position extrême de débrayage. Un tel mécanisme d'actionnement est visible aux figures 3 et 4.

Le mécanisme d'actionnement 54 comporte une butée annulaire d'actionnement 56 de l'embrayage qui est montée coulissante longitudinalement autour de l'arbre mené 38 sur une course d'embrayage qui est délimitée par une position extrême avant de sollicitation dans laquelle elle sollicite axialement vers l'avant l'extrémité intérieure libre 52 des rayons 50 du diaphragme 46 pour amener le plateau de pression 40 dans sa position extrême avant d'embrayage, et une position extrême arrière de repos vers laquelle la butée d'actionnement 56 est rappelée élastiquement par les rayons 50 du diaphragme 46 et qui correspond ici à la position extrême de débrayage du plateau de pression 40.

Dans le mode de réalisation représenté à la figure 2, la position extrême arrière de repos de la butée d'actionnement 56 correspond à la position extrême de débrayage du plateau de pression 40. Un tel système d'embrayage 34 est dit "normalement ouvert".

Selon une variante non représentée de l'invention, la position extrême arrière de repos de la butée d'actionnement correspond à la position extrême d'embrayage du plateau de pression. Le système d'embrayage est alors dit "normalement fermé".

Comme représenté aux figures 3 et 4, le mécanisme d'actionnement 54 comporte aussi une fourchette d'actionnement 58 qui est formée par un levier monté pivotant autour d'un axe transversal "A2".

La fourchette d'actionnement 58 présente une orientation globalement verticale. Elle est montée pivotante autour de l'axe transversal "A2" par une articulation 60, telle qu'un pivot ou une rotule, qui est portée par un support 62 fixe par rapport à l'axe de rotation "A1". Comme représenté à la figure 6, l'articulation 60 est ici formée par une rotule 64 qui est portée par le support fixe 62 et qui coopère avec une cavité 66 qui est formée dans une face arrière de la fourchette d'actionnement 58.

Comme représenté schématiquement à la figure 2, la fourchette d'actionnement 58 est agencée de manière qu'un premier point d'appui 68 de la fourchette d'actionnement 58 soit sollicité par une tige longitudinale de poussée 70 et de manière qu'un deuxième point d'appui 72 de la fourchette d'actionnement 58 sollicite la butée d'actionnement 56 vers sa position avant de sollicitation en réponse à la sollicitation de la tige de poussée 70.

Le premier point d'appui 68 est ici agencé à l'extrémité supérieure libre de la fourchette d'actionnement 58, tandis que le deuxième point d'appui 72 est agencé aux extrémités inférieures libres de la fourchette d'actionnement 58.

L'articulation 60 de la fourchette d'actionnement 58 est ici agencée verticalement entre la butée d'actionnement 56 et la tige de poussée 70. La fourchette d'actionnement 58 forme ainsi un levier dit "du premier type" ou "à bascule" dans lequel l'articulation 60 est agencée entre le premier point d'appui 68 et le deuxième point d'appui 72 de manière que la force appliquée par la tige de poussée 70 sur la fourchette d'actionnement 58 soit transmise à la butée d'actionnement 56 avec changement de sens.

La fourchette d'actionnement 58 comporte ainsi un premier bras de levier 74 qui s'étend globalement verticalement vers le haut depuis l'articulation 60 jusqu'au premier point d'appui 68 et un deuxième bras de levier 76 qui s'étend globalement verticalement vers le bas depuis l'articulation 60 jusqu'au deuxième point d'appui 72.

Selon une variante non représentée de l'invention, l'articulation de la fourchette d'actionnement n'est pas agencée entre les deux points d'application. Les deux bras de la fourchette d'actionnement s'étendent alors verticalement dans le même sens depuis l'articulation et la force appliquée à la fourchette d'actionnement par la tige de poussée est transmise sans changement de sens à la butée d'actionnement.

L'articulation 60 est fixe verticalement par rapport à la fourchette d'actionnement 58 de manière que chaque bras de levier 74, 76 présente une longueur fixe.

Comme représenté en détail aux figures 3 et 4, le mécanisme d'actionnement 54 comporte aussi un actionneur 78 qui est destiné à commander le coulissement de la butée d'actionnement 56 par l'intermédiaire de la fourchette d'actionnement 58.

L'actionneur 78 comporte un moto-réducteur électrique 80. Le moto-réducteur 80 est susceptible d'entraîner coulissement longitudinal vers l'arrière la tige de poussée 70.

Le moto-réducteur électrique 80 est ici susceptible d'entraîner en rotation un organe inférieur de sortie 82 autour d'un axe vertical "A3", comme cela est visible à la figure 5. L'organe de sortie 82 est avantageusement agencé à proximité de l'articulation 60 pour des raisons de compacité du mécanisme d'actionnement 54.

L'actionneur 78 comporte aussi un pignon 84 qui est représenté aux figures 6 et 7. Le pignon 84 est destiné à être emboîté avec un embout de connexion 86 mécanique de l'organe de sortie 82 avec un jeu angulaire "j" autour de son axe de rotation "A3" comme cela sera expliqué plus en détail par la suite. A cet effet, le pignon 84 présente dans sa face supérieure une empreinte 88 supérieure de forme complémentaire de l'embout de connexion 86. L'embout de connexion 86 présente ici une tête plate qui s'emboîte dans l'empreinte 88 en forme de fente réalisée dans la face supérieure du pignon 84. L'empreinte 88 est évasée depuis l'axe "A3" radialement vers l'extérieur pour réserver le jeu angulaire "j".

Le pignon 84 inférieur est susceptible de commander le coulissement de la tige supérieure de poussée 70 par l'intermédiaire d'un levier de renvoi 90 qui est illustré aux figures 3 et 4.

Le levier de renvoi 90 présente un axe principal globalement vertical et il est monté pivotant autour d'un axe transversal "A4" qui est agencé verticalement entre les deux extrémités inférieure 92 et supérieure 94 du levier de renvoi 90. L'axe "A4" du levier de renvoi 90 est décalé verticalement vers le haut par rapport à l'axe de pivotement "A2" de la fourchette 58.

L'extrémité inférieure 92 du levier de renvoi 90 porte une crémaillère qui est engrenée avec le pignon 84 de manière que la rotation du pignon 84 commande la position angulaire du levier de renvoi 90, tandis que l'extrémité supérieure 94 libre du levier de renvoi 90 est agencé longitudinalement en vis-à-vis du premier point d'appui 68 supérieur de la fourchette d'actionnement 58.

Comme représenté à la figure 4, la tige de poussée 70 s'étend longitudinalement depuis une première extrémité arrière libre hémisphérique jusqu'à une deuxième extrémité avant libre hémisphérique.

L'extrémité arrière libre forme une rotule qui est reçue dans une cavité formant le premier point d'appui 68 de la fourchette d'actionnement 58, tandis que l'extrémité avant libre forme une rotule qui est reçue dans une cavité de l'extrémité supérieure 94 du levier de renvoi 90.

La tige de poussée 70 est plus particulièrement agencée verticalement au-dessus de la butée d'actionnement 56.

La rotation du pignon 84 du moto-réducteur 80 électrique est commandée par une unité électronique de commande (non représentée).

L'actionneur 78 comporte aussi des moyens de compensation qui sont destinés à équilibrer l'effort élastique exercé par les rayons 50 du diaphragme 46 sur la tige de poussée 70 par l'intermédiaire de la fourchette d'actionnement 58 lors du pivotement de la fourchette d'actionnement 58. Ainsi l'effort fourni par le moto-réducteur 80 pour l'actionnement du système d'embrayage 34 est réduit à une valeur minimale. Les moyens de compensation sont notamment visibles à la figure 4.

Les moyens de compensation comportent ici au moins un ressort de compensation 96 qui agit sur une rampe inclinée 98 portée par l'extrémité supérieure 94 du levier de renvoi 90 pour solliciter la tige de poussée 70 à l'encontre de l'effort élastique de rappel du diaphragme 46. La tige de poussée 70 est ainsi serrée longitudinalement entre la fourchette d'actionnement 58 et le levier de renvoi 90.

Le ressort de compensation 96 est agencé comprimé verticalement de manière que son extrémité inférieure prenne appui sur une paroi inférieure fixe tandis que son extrémité supérieure sollicite verticalement vers le haut la rampe inclinée 98 du levier de renvoi 90 par l'intermédiaire d'un suiveur de came à galet 100 qui est monté coulissant verticalement par rapport à ladite paroi inférieure fixe.

Le ressort de compensation 96 et la rampe inclinée 98 sont conçus de manière que l'effort exercé par le ressort de compensation 96 sur la tige de poussée 70 équilibre approximativement l'effort de rappel élastique du diaphragme 46 pour toutes les positions de la butée d'actionnement 56 entre sa position extrême de repos et sa position extrême de sollicitation.

Lors de l'utilisation du système d'embrayage 34, l'actionneur 78 est commandé de manière que l'organe de sortie 82 tourne, dans un sens horaire en vue de dessus selon la figure 7, le long d'une course angulaire d'actionnement autour de l'axe vertical de rotation "A3" depuis une position angulaire d'origine "PO" jusqu'à une position angulaire d'actionnement "PA". La course angulaire d'actionnement s'étend sur une plage angulaire qui est inférieure à 360°.

Le pignon 84 est lié à l'organe de rotation 82 de manière que dans ce sens de rotation horaire, l'organe de sortie 82 entraîne aussi le pignon 84 en rotation le long de cette course angulaire d'actionnement depuis la position angulaire d'origine "PO" vers la position angulaire d'actionnement "PA".

Ceci provoque le basculement du levier de renvoi 90 qui entraîne lui-même le déplacement de l'extrémité libre de la tige de poussée 70 longitudinalement vers l'arrière en poussant le premier bras de levier 74. Cette sollicitation fait pivoter la fourchette d'actionnement 58 autour de son axe de pivotement "A2". La fourchette d'actionnement 58 transmet alors ce mouvement à la butée d'actionnement 56 qui est poussée longitudinalement vers sa position avant de sollicitation à l'encontre de l'effort de rappel élastique du diaphragme 46 de manière à solliciter les rayons 50 du diaphragme 46 pour serrer le plateau de pression 40 contre le plateau de réaction 44 avec interposition du disque de friction 42.

Ainsi, la tige de poussée 70 pousse longitudinalement le premier bras de levier 74 pour faire coulisser la butée d'actionnement 56 par l'intermédiaire du deuxième bras de levier 76.

Inversement, lorsque la butée d'actionnement 56 est commandée longitudinalement vers sa position arrière de repos, l'organe de sortie 82 est commandé en rotation dans un sens anti-horaire. Les rayons 50 du diaphragme 46 exercent sur la butée d'actionnement 56 un effort longitudinal élastique de rappel vers l'arrière. Ce faisant, la butée d'actionnement 56 pousse le deuxième bras de levier 76 de manière à faire pivoter la fourchette d'actionnement 58, plaquant ainsi le premier bras de levier 74 contre l'extrémité libre de la tige de poussée 70. La tige de poussée 70 transmet elle-même l'effort de rappel élastique au pignon 84 par l'intermédiaire du levier de renvoi 90 afin de faire tourner le pignon 84 dans un sens anti-horaire pour accompagner le retour de l'organe de sortie 82 vers sa position angulaire d'origine "PO".

Ainsi, tout se passe comme si le jeu angulaire "j" n'existait pas, et le pignon 84 accompagne ainsi la rotation de l'organe de sortie 82 dans les deux sens entre la position angulaire d'origine "PO" et la position angulaire d'actionnement "PA".

Le système d'embrayage 34 comporte aussi un dispositif 102 de rattrapage de jeu longitudinal de l'embrayage, notamment dû à l'usure des garnitures de friction, qui est commandé de manière que la distance "d0" de la course d'embrayage de la butée d'actionnement 56 demeure sensiblement constante indépendamment de l'usure des garnitures de friction, comme expliqué en préambule de la description.

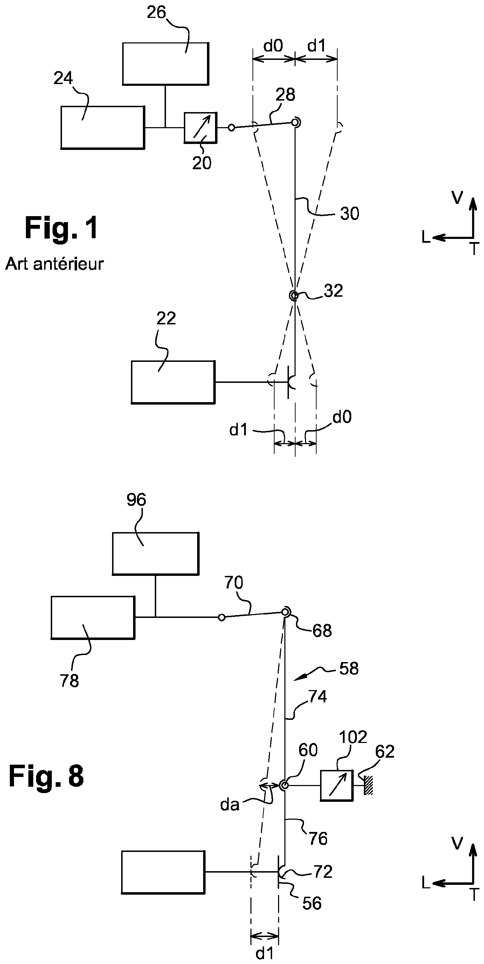

En vue de rattraper ce jeu longitudinal, l'articulation 60 de la fourchette d'actionnement 58 est montée mobile longitudinalement, et le dispositif de rattrapage de jeu 102 agit sur la position longitudinale de l'articulation 60 de la fourchette d'actionnement 58 pour rattraper le jeu longitudinal. Ce principe est illustré à la figure 8. Ceci permet d'effectuer un décalage "d1" de la course d'embrayage de la butée d'actionnement 56 sans décaler la course d'actionnement de l'extrémité arrière libre de la tige de poussée 70. Ainsi, la longueur de tige de poussée 70 est fixe.

Lors de l'action sur la position longitudinale de l'articulation 60, la fourchette d'actionnement 58 se comporte alors comme un levier dit du "troisième type" qui pivote autour de son premier point d'appui 68 supérieur sous l'impulsion du coulissement de l'articulation 60 en déplaçant longitudinalement son deuxième point d'appui 72 inférieur du jeu longitudinal. Ce rattrapage est réalisé lorsque la butée d'actionnement 56 est en position arrière de repos. Ainsi, le premier point d'appui 68 supérieur de la fourchette d'actionnement 58 est fixe lors de l'opération de rattrapage.

Lors de ce mouvement, on constate que le déplacement du deuxième point d'appui 72 de la fourchette d'actionnement 58 est démultiplié par rapport au déplacement de l'articulation 60.

Un tel dispositif de rattrapage de jeu 102 est très avantageux car il est très peu encombrant. En effet, la butée d'actionnement 56 se déplace toujours le long de la même course d'embrayage, sans décalage à mesure de l'usure des garnitures, et l'espace balayé longitudinalement par le premier point d'appui 68 supérieur de la fourchette d'actionnement 58 est toujours le même quel que soit l'état d'usure des garnitures.

De plus, du fait de la géométrie de la fourchette d'actionnement 58, la distance maximale de décalage "da" à prévoir pour l'articulation 60 est très faible par rapport à la distance maximale de décalage "d1" à prévoir pour la course d'embrayage de la butée d'actionnement 56 en fonction de l'usure maximale des garnitures de friction.

Dans les exemples représentés aux figures, le dispositif de rattrapage de jeu 102 est commandé par l'actionneur 78. A cet effet, le dispositif de rattrapage 102 comporte des moyens de transmission du mouvement de l'organe de sortie 82 du moto-réducteur électrique 80 jusqu'à l'articulation 60. Ces moyens de transmission sont particulièrement compact du fait de la proximité entre l'articulation 60 et l'organe de sortie 82.

Dans le mode de réalisation représenté aux figures, l'actionneur 78 est réalisé de manière à commander le dispositif de rattrapage 102 lorsque le système d'embrayage 34 est dans son état de repos, correspondant ici à la position extrême de repos de la butée d'actionnement 56. A cet effet, comme illustré aux figures 5, 7 et 10, l'organe de sortie 82 du moto-réducteur 80 est susceptible d'être tourné sur une plage angulaire qui est inférieure à 360° et qui est divisé en deux courses angulaires non chevauchantes :
- la première course angulaire d'actionnement "C1" entre la position angulaire d'origine "PO" telle que représentée à la figure 3, et une position angulaire d'actionnement "PA" qui permet d'agir sur la butée d'actionnement 56 pour commander le système d'embrayage 34, l'organe de sortie 82 tournant dans un sens horaire selon la figure 7 en partant de la position angulaire d'origine "PO" jusqu'à la position angulaire d'actionnement "PA" ;
- et une deuxième course angulaire de réglage "C2" qui prolonge la première course d'actionnement dans un sens anti-horaire selon la figure 7 en partant de la position angulaire d'origine "PO" jusqu'à une position angulaire de réglage négatif, et le long de laquelle l'actionneur 78 commande le dispositif de rattrapage 102 par l'intermédiaire des moyens de transmission sans agir sur l'état du système d'embrayage 34.

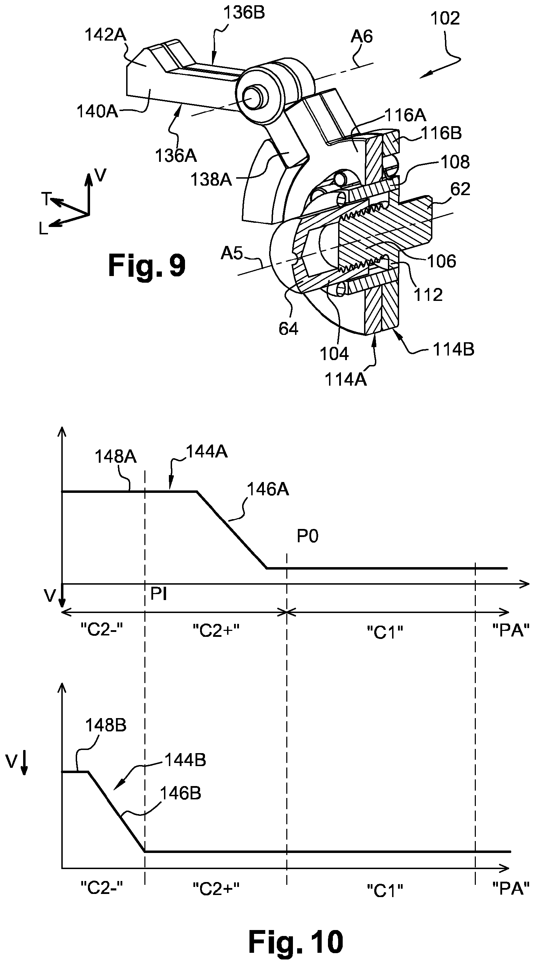

Les courses "C1" et "C2" sont aussi représentées à la figure 10.

Le long de la deuxième course angulaire de réglage "C2", l'organe de sortie 82 tourne sans entraîner en rotation le pignon 84 du fait de la présence du jeu angulaire "j". A cet effet, la course angulaire de réglage s'étend sur un plage angulaire inférieure ou égale au jeu angulaire "j" existant entre l'organe de sortie 82 et le pignon 84. Ainsi, lorsque l'organe de sortie 82 parcourt la deuxième course angulaire de réglage, la butée d'actionnement 56, la fourchette d'actionnement 58, la tige de poussée 70 et le levier de renvoi 90 demeurent immobiles de manière à ne pas influencer l'état du système d'embrayage 34. La butée d'actionnement 56 est maintenue dans sa position arrière de repos, par exemple par une face de blocage, ce qui bloque la rotation du pignon 84 dans un sens anti-horaire dans sa position angulaire d'origine "PO".

On a représenté aux figures 9 à 16 un mode de réalisation des moyens de transmission du mouvement.

Selon ce mode de réalisation et comme représenté à la figure 9, la rotule 64 d'articulation 60 de la fourchette d'actionnement 58 est formée par l'extrémité avant libre d'un cylindre 104. Le cylindre 104 comporte un taraudage central qui est ouvert longitudinalement vers l'arrière.

Le cylindre 104 est vissé sur une vis 106 d'axe longitudinale "A5" qui s'étend longitudinalement vers l'avant depuis le support 62 qui est fixe. Le support 62 est par exemple fixé rigidement à la boîte de vitesses (non représentée).

Ainsi, la rotation du cylindre 104 autour de son axe longitudinal "A5" dans un premier sens négatif de vissage permet de déplacer l'articulation 60 dans un sens de recul et la rotation du cylindre 104 dans un deuxième sens opposé positif de dévissage permet de déplacer longitudinalement l'articulation 60 dans un sens d'avance.

Comme représenté à la figure 7, le cylindre 104 est reçu dans un manchon 108 de réglage. Le manchon 108 de réglage comporte une face cylindrique extérieure 110 de révolution.

Le manchon 108 est solidaire au moins en rotation avec le cylindre 104. A cet effet, au moins un tronçon du cylindre 104 présente une section transversale de profil non circulaire. Comme représenté à la figure 12, un tronçon du cylindre 104 présente ici une section transversale de profil hexagonal et le manchon 108 présente un orifice interne de contour complémentaire.

Dans le mode de réalisation représenté aux figures, le cylindre 104 est cependant libre de coulisser longitudinalement par rapport au manchon 108.

Le support fixe 62 comporte ici une collerette 112 de guidage du manchon 108. La collerette 112 présente une forme circulaire afin de ne permettre la rotation du manchon 108 par rapport au support fixe 62.

Selon une variante non représentée de l'invention, le manchon est solidaire en coulissement longitudinal avec le cylindre.

Le manchon 108 forme ainsi un organe de réglage qui permet d'agir sur la position longitudinale de l'articulation 60 en faisant tourner le cylindre 104 autour de son axe "A5" dans un sens positif ou négatif.

Le manchon 108 forme un moyeu pour deux roue libres 114A, 114B dont chacune est destinée à entraîner le manchon 108 en rotation dans un sens associé. Les deux roues libres 114A, 114B présentent une structure similaire. Les éléments de la première roue libre 114A seront désignés par des numéros de référence suivis de la lettre "A1", tandis que les éléments similaires de la deuxième roue libre 114B seront désignés par des numéros de référence suivis de la lettre "A2".

Plus particulièrement, une première roue libre avant 114A est montée à rotation autour du manchon 108 de réglage. La première roue libre 114A comporte une première bague 116A extérieure qui est montée rotative autour du manchon 108 et autour de l'axe "A5". La première bague 116A est délimitée radialement vers l'intérieur par une face cylindrique intérieure qui présente un diamètre sensiblement égal à celui de la face cylindrique extérieure 110 du manchon 108.

La première bague 116A comporte dans sa face cylindrique intérieure 118A au moins une encoche 118A qui s'étend circonférentiellement. L'encoche 118A est ici débouchante longitudinalement des deux côtés. Comme représenté en vue de face, l'encoche 118A est destinée à loger un rouleau 120A formant un élément de liaison. Le rouleau 120A présente un axe principal longitudinal. Ainsi, le rouleau 120A est interposé radialement entre le fond de l'encoche 118A et le manchon 108.

Comme représenté à la figure 12, l'encoche 118A comporte une première portion 122A d'extrémité positive de roulement libre qui présente une hauteur radiale supérieure au diamètre du rouleau 120A.

L'encoche 118A comporte aussi une deuxième portion 124A d'extrémité négative de coincement dans laquelle le fond de l'encoche 118A présente une pente qui s'étend dans la continuité de la première portion de roulement libre 122A en se rapprochant radialement du manchon 108. Ainsi, le rouleau 120A est susceptible d'être coincé entre la première bague 116A et l'organe de roulement lorsque la première bague 116A est tournée dans un sens positif.

Le rouleau 120A est ainsi mobile par rapport à la première bague 116A entre :
- une position de solidarisation, comme représentée aux figures 12 et 12A, dans laquelle il est agencé dans la deuxième portion 124A de coincement et dans laquelle la première bague 116A et le manchon 108 sont solidaire en rotation dans le sens d'entraînement et vers laquelle le rouleau 120A est rappelé élastiquement ;
- et une position de libération, comme représentée aux figures 13 et 13A, dans laquelle le rouleau 120A est agencé dans la première portion 122A de roulement libre et dans laquelle la première bague 116A est libre de tourner par rapport au manchon 108.

Le rappel élastique du rouleau 120A vers sa position de solidarisation est réalisé par un ressort 126A de compression qui est interposé circonférentiellement entre un paroi d'extrémité positive de l'encoche 118A et le rouleau 120A.

Ainsi, la première bague 116A de la première roue libre 114A est susceptible d'entraîner en rotation le manchon 108 uniquement lorsqu'elle est tournée dans un premier sens d'entraînement, qui est ici un sens positif, depuis une position angulaire initiale vers une position angulaire finale.

En revanche, lorsqu'elle est tournée dans l'autre sens dit "de rotation libre", le rouleau 120A roule sur le manchon 108 à l'encontre de la force de rappel élastique du ressort 126A de manière à être agencé dans la première portion 122A de roulement libre de l'encoche 120A. Ainsi, dans ce sens de rotation négatif, la première bague 116A n'entraîne pas en rotation le manchon 108 de réglage.

Une deuxième roue libre 114B arrière est montée à rotation autour du manchon 108 et autour de l'axe "A5". La deuxième roue libre 114B présente une structure similaire à celle de la première roue libre 114A. Seule la forme de l'encoche 118B est inversée par rapport à celle de la première roue libre 114A. Ainsi, la deuxième bague 116B de la deuxième roue libre 114B est susceptible d'entraîner en rotation le manchon 108 uniquement lorsqu'elle est tournée dans un deuxième sens négatif d'entraînement opposé audit premier sens positif d'entraînement de la première roue libre 114A, depuis une position angulaire initiale vers une position angulaire finale.

En outre, chaque bague 116A, 116B comporte une patte 128A, 128B qui s'étend radialement en saillie vers l'extérieur. Les deux pattes 128A, 128B sont ici agencées en coïncidence longitudinale lorsque la première roue libre 114A occupe sa position angulaire finale et lorsque la deuxième roue libre 114B occupe sa position angulaire initiale.

La première roue libre 114A est rappelée élastiquement vers sa position angulaire finale, tandis que la deuxième roue libre 114B est rappelée élastiquement vers sa position angulaire initiale. Dans cette position, la rotation de chacune des roues libres 114A, 114B est bloquée dans un sens positif par butée de chaque patte 128A, 128B contre une face commune de butée 130.

Le rappel élastique est réalisé par un ressort de rappel qui pousse chaque patte 128A, 128B dans un sens positif. Chaque patte 128A, 128B est munie d'un ressort de rappel 132A, 132B associé.

En outre, le dispositif de réglage comporte aussi des moyens de débrayage sélectif de chaque roue libre 114A, 114B pour autoriser la rotation libre du manchon 108 dans les deux sens par rapport à ladite roue libre 114A, 114B lorsque cette dite roue libre 114A, 114B occupe sa position angulaire initiale. En effet, en l'absence de tels moyens, les deux roues libres 114A, 114B seraient simultanément en prise avec le manchon 108, ce qui provoquerait un blocage total de la rotation du manchon 108 dans les deux sens.

Ces moyens de débrayage comportent une butée fixe par rapport au support qui est formée par un ergot commun de butée 134 qui s'étend longitudinalement à travers les deux encoches 118A, 118B. Pour chacune des roues libres 114A, 114B, l'encoche 118A, 118B est agencée de manière que l'ergot de butée 134 maintienne l'élément mobile associé dans sa position de libération lorsque la bague 116A, 116B de ladite roue libre 114A, 114B occupe sa position angulaire initiale. En d'autres termes, lorsque l'une des roues libres 114A, 114B occupe sa position angulaire initiale, l'ergot de butée 134 retient le rouleau 120A dans sa position de libération à l'encontre de l'effort de rappel élastique.

En outre, la portion de coincement de chaque encoche 118A, 118B est suffisamment longue circonférentiellement pour permettre la rotation de chaque bague 116A, 116B vers sa position angulaire finale sans interférer avec l'ergot de butée 134.

Pour commander la rotation de chacune des roues libres 114A, 114B, le dispositif de réglage comporte en outre un culbuteur arrière 136B et un culbuteur avant 136A qui sont identiques. Chaque culbuteur 136A, 136B est associé à une roue libre 114A, 114B. Les deux culbuteurs 136A, 136B étant identiques dans leur structure et dans leur agencement, seul le culbuteur avant 136A de la première roue libre 114A sera décrit.

Le culbuteur 136A est monté basculant autour d'un axe longitudinal "A6". Il comporte un doigt de poussée 138A qui s'étend perpendiculairement depuis l'axe de basculement "A6" et qui est interposé entre la face de butée 130 et la patte 128A de la première bague 116A de la première roue libre 114A.

Le culbuteur 136A comporte aussi un deuxième doigt de commande 140A qui s'étend transversalement depuis l'axe de basculement "A6", globalement à l'opposé du doigt de poussée 138A, jusqu'à une extrémité libre agencée à proximité de l'organe de sortie 82. L'extrémité libre du doigt de commande 140A est munie d'un bossage 142A qui s'étend verticalement en saillie vers le haut.

L'organe de sortie 82 comporte un premier chemin de came 144A extérieur formant un arc de cercle centré sur l'axe de rotation "A3". Ce chemin de came 144A est destinée à être en contact avec le bossage 142A du premier culbuteur 136A lorsque l'organe de sortie 82 parcourt une portion de la course angulaire de réglage, comme cela sera expliqué par la suite.

Comme représenté aux figures 5 et 10, ce premier chemin de came 144A présente, en tournant dans un sens anti-horaire selon la figure 5, un premier secteur angulaire formant une pente 146A inclinée vers le bas jusqu'à un deuxième secteur angulaire formant un palier inférieur 148A.

Le doigt de commande 140A du premier culbuteur 136A forme ainsi un premier suiveur de came qui est associé au premier chemin de came 144A.

La rotation de l'organe de sortie 82 dans un sens anti-horaire entraîne ainsi le glissement du bossage 142A le long de la pente 146A du chemin de came 144A. Ceci provoque le déplacement de l'extrémité libre du doigt de commande 140A du premier culbuteur 136A vers le bas, et donc le basculement du premier culbuteur 136A. Le basculement du premier culbuteur 136A est ainsi susceptible de faire tourner la première roue libre 114A en rotation vers sa position angulaire initiale par effet de levier et à l'encontre de l'effort de rappel élastique, comme représenté à la figure 13.

De manière similaire, comme représentés aux figures 5 et 10, l'organe de sortie 82 comporte un deuxième chemin de came 144B qui est destinée à être en contact avec le bossage 142B du doigt de commande 140B du deuxième culbuteur 136B. Le deuxième chemin de came 144B est agencé parallèlement au premier chemin de came 144A et radialement vers l'intérieur par rapport à l'axe de rotation "A3".

Le profil du deuxième chemin de came 144B est identique au profil du premier chemin de came 144A. Cependant, le profil du deuxième chemin de came 144B est décalé angulairement autour de l'axe de rotation "A3" de manière que les pentes 146A, 146B des chemins de came 144A, 144B soient décalées l'une par rapport à l'autre et ne se chevauchent pas. Ainsi, les deux culbuteurs 136A, 136B sont susceptibles de bouger l'un après l'autre, mais pas simultanément.

Le doigt de commande 140B du deuxième culbuteur 136B forme ainsi un deuxième suiveur de came qui est associé au deuxième chemin de came 144B, le deuxième chemin de came 144B étant solidaire de l'organe de sortie 82.

Le déplacement de l'extrémité libre du doigt de commande 140B du deuxième culbuteur 136B vers le bas est ainsi susceptible de faire tourner la deuxième roue libre 114B en rotation vers sa position angulaire finale par effet de levier et à l'encontre de l'effort de rappel élastique.

Comme représenté à la figure 10, la deuxième course angulaire de réglage de l'organe de sortie 82 est divisée en :
- une première portion angulaire de réglage "C2+" dans un premier sens d'avance de l'articulation 60 qui s'étend de la position angulaire d'origine "PO" jusqu'à une position angulaire intermédiaire "PI" de l'organe de sortie 82, et
- une deuxième portion angulaire de réglage "C2-" dans un deuxième sens de recul de l'articulation 60 qui s'étend au-delà de la position intermédiaire "PI" jusqu'à la position angulaire de réglage négatif.

Pour ce faire, l'organe de sortie 82 est indexé angulairement autour de l'axe de rotation "A3" de manière que :
- l'extrémité supérieure de la pente 146A du premier chemin de came 144A soit en contact avec le doigt de commande 140A du premier culbuteur 136A lorsque l'organe de sortie 82 occupe sa position angulaire d'origine "PO" ; et de manière que
- l'extrémité supérieure de la pente 146B du deuxième chemin de came 144B soit en contact avec le doigt de commande 140B du deuxième culbuteur 136B lorsque l'organe de sortie 82 occupe sa position angulaire intermédiaire "PI", le doigt de commande 140A du premier culbuteur 136A étant alors en contact avec le palier inférieur 148A du premier chemin de came 144A.

Le dispositif de réglage est déclenché lorsque l'unité électronique de contrôle de l'actionneur 78 envoie un signal de réglage au motoréducteur électrique 80. Le motoréducteur 80 commande alors la rotation de l'organe de sortie 82 depuis sa position angulaire d'origine "PO" dans un sens anti-horaire. Du fait du jeu angulaire "j", le pignon 84 demeure alors immobile.

Lors d'un réglage pour compenser l'usure d'un disque de friction, un premier procédé de rattrapage de jeu dit "positif" est déclenché afin que l'articulation 60 soit déplacée d'un nombre de pas déterminé longitudinalement vers l'avant. Ce premier procédé sera décrit en référence aux figures 10 à 13.

Ce procédé de rattrapage positif comporte une étape unique au cours de laquelle l'organe de sortie 82 est commandé pour tourner dans un sens de anti-horaire le long de la première portion angulaire de réglage "C2+" jusqu'à sa position angulaire intermédiaire "PI".

Lors de cette course, le deuxième culbuteur 136B demeure immobile, et la deuxième roue libre 114B demeure ainsi dans sa position angulaire initiale, comme représenté à la figure 11.

En revanche, le premier culbuteur 136A est basculé par contact entre le doigt de commande 140A et la pente 146A du premier chemin de came 144A. Ceci entraîne le pivotement de la première bague 116A de la première roue libre 114A depuis sa position angulaire finale, représentée à la figure 12, vers sa position angulaire initiale, représentée à la figure 13. Lors de cette rotation dans le sens négatif de roulement libre, le rouleau 120A qui est ralenti par le frottement contre le manchon 108, occupe sa position de rotation libre. La première bague 116A pivote donc sans entraîner en rotation le manchon 108, comme cela est illustré par la flèche en pointillé de la figure 12A.

Puis, le motoréducteur 80 commande le retour de l'organe de sortie 82 vers sa position angulaire d'origine "PO". Le culbuteur 136A n'étant plus maintenu par le premier chemin de came 144A, l'effort de rappel élastique exercé sur la patte 128A de la première bague 116A provoque le pivotement de la première bague 116A vers sa position angulaire finale. Lorsque la première bague 116A tourne dans ce sens positif d'entraînement, elle est en prise avec le manchon 108 par coincement du rouleau 120A entre le fond de l'encoche 118A et le manchon 108.

Dans sa position angulaire initiale, la deuxième bague 116B est débrayée ce qui permet de libérer la rotation du manchon 108 par rapport à la deuxième bague 116B. Le manchon 108 tourne en accompagnant la rotation dans le sens positif de la première bague 116A, entraînant ainsi en rotation le cylindre 104 dans un sens positif de dévissage, comme cela est illustré par les flèches en traits continus de la figure 12A. L'articulation 60 a ainsi avancée longitudinalement d'un pas.

Cette étape unique est répétée autant de fois que nécessaire pour faire avancer l'articulation 60 du nombre de pas déterminé.

Au contraire, lorsque le disque de friction usagé a été remplacé par un disque de friction neuf ou lorsqu'il est nécessaire de procéder à un réglage négatif, l'unité électronique de commande envoi un deuxième signal au motoréducteur électrique 80 pour mettre en oeuvre un deuxième procédé de rattrapage de jeu dit "négatif". Ce deuxième procédé sera décrit en référence aux figures 10 et 14 à 16.

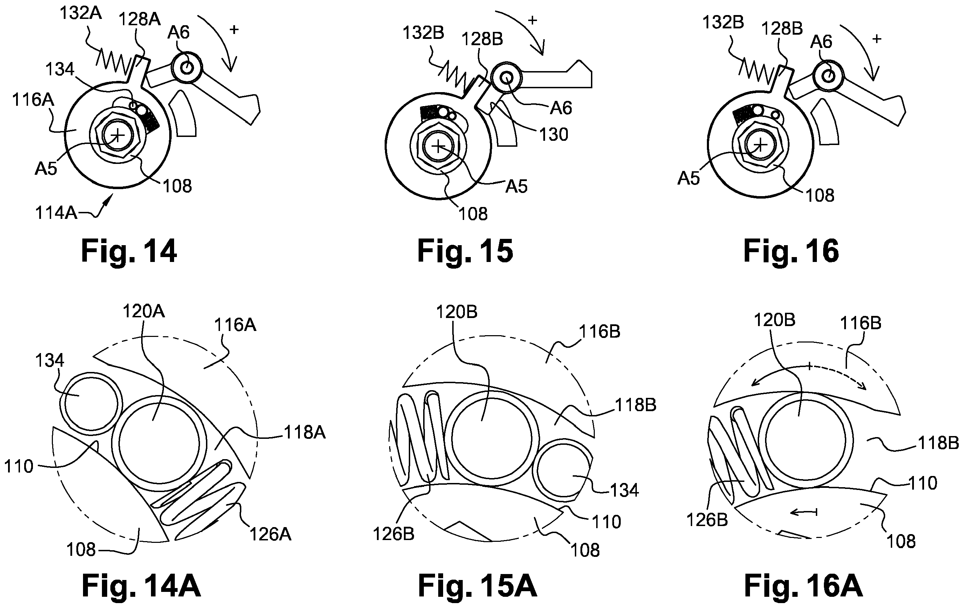

Ce deuxième procédé comporte une première étape d'initialisation au cours de laquelle le motoréducteur 80 tourne de manière à entraîner l'organe de sortie 82 dans un sens anti-horaire le long de la première portion angulaire de réglage "C2+" vers sa position angulaire intermédiaire "PI" de manière que les deux bagues 116A, 116B soient dans leur position angulaire initiale comme illustré aux figures 14 et 15. Comme expliqué précédemment, le pivotement de la première bague 116A vers sa position angulaire initiale n'entraîne aucune rotation du manchon 108.

Puis, lors d'une deuxième étape de réglage négatif, le motoréducteur électrique 80 poursuit sa rotation dans un sens anti-horaire pour entraîner l'organe de sortie 82 vers sa position angulaire finale le long de la deuxième portion angulaire de réglage "C2-". Ce faisant, le premier culbuteur 136A est maintenu pivoté par contact entre le doigt de commande 140A et le palier inférieur 148A du premier chemin de came 144A. La première bague 116A demeure donc dans sa position angulaire initiale, illustrée à la figure 14, lorsque l'organe de sortie 82 parcourt dans les deux sens la deuxième portion angulaire de réglage "C2-".

Durant cette étape, le deuxième culbuteur 136B est basculé par contact entre le doigt de commande 140B et la pente 146B du deuxième chemin de came 144B. Ceci provoque le pivotement de la deuxième bague 116B vers sa position angulaire finale, illustrée à la figure 16. Dans ce sens négatif d'entraînement, la deuxième bague 116B est en prise avec le manchon 108, ce qui provoque la rotation du manchon 108, comme cela est indiqué par les deux flèches en traits continus de la figure 16A.

La première bague 116A occupant sa position angulaire initiale, elle n'est pas en prise avec le manchon 108, ce qui permet la rotation libre du manchon 108 par rapport à la première bague 116A.

Puis, le motoréducteur 80 est rappelé vers sa position angulaire intermédiaire "PI" de manière à ramener la deuxième bague 116B vers sa position angulaire initiale par rappel élastique sans entraîner en rotation le manchon 108 comme cela est représenté par la flèche en pointillés de la figure 16A.

Cette deuxième étape de réglage est répétée de manière à faire reculer l'articulation 60 du nombre de pas déterminé.

Il est nécessaire réaliser l'opération une fois de plus que nécessaire car lors du retour de l'organe de sortie 82 vers sa position angulaire d'origine "PO", la première roue libre 114A entraînera une fois le manchon 108 en rotation dans le sens positif.

Ainsi, lors de la mise en oeuvre des procédés de réglage, la tige de poussée 70 est toujours en contact simultané avec la fourchette d'actionnement 58 et avec le levier de renvoi 90.

Le dispositif de rattrapage 102 réalisé selon les enseignements de l'invention n'est bien entendu pas limité à l'exemple qui a été représenté aux figures.

On comprendra par exemple que les roues libres à rouleau peuvent être remplacées par des roues libres à cliquet sans sortir de la portée de l'invention. Dans ce cas, l'élément de blocage n'est plus un rouleau mais un cliquet qui est susceptible d'être débrayé par un ergot de débrayage de la même façon que le rouleau décrit dans l'exemple des figures.

Le dispositif de rattrapage 102 par coulissement de l'articulation 60 de la fourchette d'actionnement 58 réalisé selon les enseignements de l'invention est ainsi avantageusement très compact.

En outre, le fait que ce dispositif de rattrapage 102 soit commandé par l'actionneur 78 permet de diminuer encore l'encombrement et les coûts de réalisation.

De plus, un tel dispositif de rattrapage 102 ainsi piloté permet de rattraper non seulement les jeux dus à l'usure des garnitures mais aussi de rattraper les jeux de montage ou de fabrication.

## Revendications

1. Mécanisme d'actionnement (54) pour un système d'embrayage à friction (34) de véhicule automobile qui comporte :
- une fourchette d'actionnement (58) qui est montée pivotante autour d'un axe transversal (A2) par l'intermédiaire d'une articulation (60) mobile longitudinalement et qui comporte deux bras de levier (74, 76) dont chacun présente une longueur fixe ;
- un actionneur (78) qui est destinée à faire coulisser une butée d'actionnement (56) du système d'embrayage (34) par l'intermédiaire de la fourchette d'actionnement (58) ;
- un dispositif de rattrapage (102) de jeu longitudinal de l'embrayage (34), notamment de l'usure de garnitures de friction, qui agit sur la position longitudinale de l'articulation (60) de la fourchette d'actionnement (58) par l'intermédiaire d'un organe de réglage (108) monté rotatif sur un support fixe (62), pour rattraper le jeu longitudinal ;
**caractérisé en ce qu'**il comporte :
- une première roue libre (114A) qui est montée à rotation autour de l'organe de réglage (108), la première roue libre (114A) étant susceptible d'entraîner en rotation l'organe de réglage (108) uniquement lorsqu'elle est tournée dans un premier sens d'entraînement, depuis une position angulaire initiale vers une position angulaire finale ; et
- une deuxième roue libre (114B) qui est montée à rotation autour de l'organe de réglage (108), la deuxième roue libre (114B) étant susceptible d'entraîner en rotation l'organe de réglage (108) uniquement lorsqu'elle est tournée dans un deuxième sens d'entraînement opposé audit premier sens d'entraînement, depuis une position angulaire initiale vers une position angulaire finale ;
- des moyens (134) de débrayage sélectif de chaque roue libre (114A, 114B) pour autoriser la rotation libre de l'organe de réglage (108) dans les deux sens par rapport à ladite roue libre (114A, 114B) lorsque cette dite roue libre (114A, 114B) occupe sa position angulaire initiale.

2. Mécanisme (54) selon la revendication précédente, **caractérisé en ce que** chaque roue libre (114A, 114B) comporte une bague (116A, 116B) périphérique et un élément de liaison (120A, 120B) avec l'organe de réglage (108), ledit élément de liaison (120A, 120B) étant mobile par rapport à la bague (116A, 116B) associée entre :
- une position de solidarisation dans laquelle la bague (116A, 116B) et l'organe de réglage (108) sont solidaires en rotation dans le sens d'entraînement et vers laquelle l'élément de liaison (120A, 120B) est rappelé élastiquement,
- et une position de libération dans laquelle la bague (116A, 116B) est libre de tourner par rapport à l'organe de réglage (108) ;
et **en ce que** les moyens de débrayage comportent une butée (134) fixe par rapport au support (62) qui maintient l'élément de liaison (120A, 120B) dans sa position de libération lorsque la bague (116A, 116B) associée occupe sa position angulaire initiale.

3. Mécanisme (54) selon la revendication précédente, **caractérisé en ce que** la butée (134) est commune aux deux roues libres (114A, 114B), et **en ce que** la première roue libre (114A) est rappelée élastiquement vers sa position angulaire finale, tandis que la deuxième roue libre (114B) est rappelée élastiquement vers sa position angulaire initiale.

4. Mécanisme (54) selon la revendication précédente, **caractérisé en ce que** l'actionneur (78) comporte un organe de sortie (82) qui est mobile sur un trajet qui est divisé en deux courses non chevauchantes :
- une première course d'actionnement (C1) qui permet d'agir sur la butée d'actionnement (56) pour commander l'embrayage à friction (34), la butée d'actionnement (56) étant rappelée élastiquement vers une position extrême de repos correspondant à une position d'origine (PO) de l'organe de sortie (82) ;
- et une deuxième course de réglage (C2) qui prolonge la première course (C1) en-deçà de la position d'origine (PO) de l'organe de sortie (82) et le long de laquelle l'actionneur (78) commande le dispositif de rattrapage (102) par l'intermédiaire de moyens de transmission du mouvement sans agir sur l'état de l'embrayage (34).

5. Mécanisme (54) selon la revendication précédente, **caractérisé en ce que** la deuxième course de réglage (C2) est divisée en une première portion de réglage (C2+) dans un premier sens qui s'étend de la position d'origine (PO) jusqu'à une position intermédiaire (PI) de l'organe de sortie (82), et une deuxième portion de réglage (C2-) dans un deuxième sens qui s'étend en-deçà de la position intermédiaire (PI),
et **en ce que** la première roue libre (114A) est commandée en rotation vers sa position angulaire initiale à l'encontre de l'effort de rappel élastique tout le long de la deuxième course de réglage (C2), le retour de l'organe de sortie (82) vers sa position d'origine (PO) provoquant la rotation de la première roue libre (114A) dans le sens d'entraînement de l'organe de réglage (108) pour faire coulisser l'articulation (60) dans un premier sens,
tandis que la deuxième roue libre (114B) est commandée en rotation vers sa position angulaire finale à l'encontre de l'effort de rappel élastique sur la deuxième portion de réglage (C2-), provoquant la rotation de la deuxième roue libre (114B) dans le sens d'entraînement de l'organe de réglage (108) pour faire coulisser l'articulation (60) dans un deuxième sens.

6. Mécanisme (54) selon la revendication précédente, **caractérisé en ce que** les moyens de transmission comportent :
- un premier chemin de came (144A) qui est solidaire de l'organe de sortie (82) et qui comporte une pente (146A) ;
- un premier suiveur de came (136A) qui est associé au premier chemin de came (144A), ledit suiveur de came (136A) étant susceptible de faire tourner la bague (116A) de la première roue libre (114A) en rotation vers sa position angulaire initiale à l'encontre de l'effort élastique de rappel ;
- un deuxième chemin de came (144B) qui est solidaire de l'organe de sortie (82) et qui comporte une pente (146B) ;
- un deuxième suiveur de came (136B) qui est associé au deuxième chemin de came (144B), le suiveur de came (136B) étant susceptible de faire tourner la bague (116B) de la deuxième roue libre (114B) en rotation vers sa position angulaire finale à l'encontre de l'effort élastique de rappel.

7. Mécanisme (54) selon la revendication précédente, **caractérisé en ce que** chaque suiveur de came est formé par un culbuteur (136A, 136B).

8. Mécanisme (54) selon l'une quelconque des revendications précédentes, **caractérisé en ce qu'**au moins l'une des roues libres (114A, 114B) est formée par une roue libre à rouleau (120A, 120B).

9. Mécanisme (54) selon l'une quelconque des revendications 1 à 7, **caractérisé en ce qu'**au moins l'une des roues libres (114A, 114B) est formée par une roue libre à cliquet.

10. Mécanisme (54) selon l'une quelconque des revendications 4 à 7, **caractérisé en ce que** la fourchette d'actionnement (58) est entraînée par l'actionneur (78) par l'intermédiaire d'un pignon (84) qui est destiné à être emboîté avec un embout de connexion (86) mécanique de l'organe de sortie (82) avec un jeu angulaire (j) autour de son axe de rotation (A3) de manière que, le long de la deuxième course angulaire de réglage (C2), l'organe de sortie (82) tourne sans entraîner en rotation le pignon (84).

## Patentansprüche

1. Betätigungsmechanismus (54) für ein Reibungskupplungssystem (34) eines Kraftfahrzeugs, das aufweist:
- eine Betätigungsgabel (58), die über ein in Längsrichtung bewegbares Gelenk (60) schwenkbar um eine Querachse (A2) montiert ist und die zwei Hebelarme (74, 76), von denen jeder eine feste Länge besitzt, aufweist;
- einen Betätiger (78), der dazu bestimmt ist, die Verschiebung eines Betätigungsanschlags (56) des Kupplungssystems (34) über die Betätigungsgabel (58) zu veranlassen;
- eine Vorrichtung zum Ausgleich (102) eines Längsspiels der Kupplung (34), insbesondere des Verschleißes der Reibbeläge, die auf die Längsposition des Gelenks (60) der Betätigungsgabel (58) über ein Stellglied (108) einwirkt, das drehbar an einem festen Träger (62) montiert ist, um das Längsspiel auszugleichen;
**dadurch gekennzeichnet, dass** er aufweist:
- einen ersten Freilauf (114A), der um das Stellglied (108) drehbar montiert ist, wobei der erste Freilauf (114A) das Stellglied (108) nur dann in Drehung versetzen kann, wenn er in einer ersten Antriebsrichtung, von einer anfänglichen Winkelstellung hin zu einer finalen Winkelstellung, gedreht wird; und
- einen zweiten Freilauf (114B), der um das Stellglied (108) drehbar montiert ist, wobei der zweite Freilauf (114B) das Stellglied (108) nur dann in Drehung versetzen kann, wenn er in einer zweiten Antriebsrichtung, die der genannten ersten Antriebsrichtung entgegengesetzt ist, von einer anfänglichen Winkelstellung hin zu einer finalen Winkelstellung, gedreht wird;
- Mittel (134) zum selektiven Ausrücken jedes Freilaufs (114A, 114B), um die freie Drehung des Stellglieds (108) in den beiden Richtungen bezogen auf den genannten Freilauf (114A, 114B) zu gestatten, wenn dieser genannte Freilauf (114A, 114B) sich in seiner anfänglichen Winkelstellung befindet.

2. Mechanismus (54) nach dem vorangehenden Anspruch, **dadurch gekennzeichnet, dass** jeder Freilauf (114A, 114B) einen Umfangsring (116A, 116B) und ein Element zur Verbindung (120A, 120B) mit dem Stellglied (108) aufweist, wobei das genannte Element zur Verbindung (120A, 120B) bezogen auf den zugeordneten Ring (116A, 116B) beweglich ist zwischen:
- einer Position zur festen Verbindung, in der der Ring (116A, 116B) und das Stellglied (108) in Antriebsrichtung drehfest verbunden sind und in deren Richtung das Element zur Verbindung (120A, 120B) elastisch zurückgestellt wird,
- und einer Freigabeposition, in der der Ring (116A, 116B) bezogen auf das Stellglied (108) frei drehen kann;
und dass die Ausrückmittel einen Anschlag (134) umfassen, der fest bezogen auf den Träger (62) ist, der das Element zur Verbindung (120A, 120B) in seiner Freigabeposition hält, wenn der zugeordnete Ring (116A, 116B) sich in seiner anfänglichen Winkelstellung befindet.

3. Mechanismus (54) nach dem vorangehenden Anspruch, **dadurch gekennzeichnet, dass** der Anschlag (134) für beide Freiläufe (114A, 114B) gemeinsam ist, und dass der erste Freilauf (114A) in Richtung seiner finalen Winkelstellung elastisch zurückgestellt wird, während der zweite Freilauf (114B) in Richtung seiner anfänglichen Winkelstellung elastisch zurückgestellt wird.

4. Mechanismus (54) nach dem vorangehenden Anspruch, **dadurch gekennzeichnet, dass** der Betätiger (78) ein Ausgangsglied (82) aufweist, das auf einer Strecke beweglich ist, die in zwei nicht überlappende Wege geteilt ist:
- einen ersten Betätigungsweg (C1), der es gestattet, auf den Betätigungsanschlag (56) einzuwirken, um die Reibungskupplung (34) zu steuern, wobei der Betätigungsanschlag (56) elastisch in Richtung einer Ruhe-Endstellung zurückgestellt wird, die einer Ursprungsstellung (PO) des Ausgangsglieds (82) entspricht;
- und einen zweiten Regelungsweg (C2), der den ersten Weg (C1) diesseits der Ursprungsstellung (PO) des Ausgangsglieds (82) verlängert und entlang dessen der Betätiger (78) die Vorrichtung zum Ausgleich (102) über Mittel zur Übertragung der Bewegung steuert, ohne auf den Zustand der Kupplung (34) einzuwirken.

5. Mechanismus (54) nach dem vorangehenden Anspruch, **dadurch gekennzeichnet, dass** der zweite Regelungsweg (C2) in einen ersten Regelungsabschnitt (C2+) in einer ersten Richtung, der sich von der Ursprungsstellung (PO) bis zu einer Zwischenstellung (PI) des Ausgangsglieds (82) erstreckt, und einen zweiten Regelungsabschnitt (C2-) in einer zweiten Richtung, der sich diesseits der Zwischenstellung (PI) erstreckt, geteilt ist,
und dass der erste Freilauf (114A) in Drehung hin zu seiner anfänglichen Winkelstellung entgegen der elastischen Rückstellkraft entlang des ganzen zweiten Regelungswegs (C2) gebracht wird, wobei die Rückkehr des Ausgangsglieds (82) hin zu seiner Ursprungsstellung (PO) die Drehung des ersten Freilaufs (114A) in der Antriebsrichtung des Stellglieds (108) bewirkt, um das Gelenk (60) in einer ersten Richtung zu verschieben,
während der zweite Freilauf (114B) in Drehung hin zu seiner finalen Winkelstellung entgegen der elastischen Rückstellkraft am zweiten Regelungsabschnitt (C2-) gebracht wird, wobei die Drehung des zweiten Freilaufs (114B) in der Antriebsrichtung des Stellglieds (108) bewirkt wird, um das Gelenk (60) in einer zweiten Richtung zu verschieben.

6. Mechanismus (54) nach dem vorangehenden Anspruch, **dadurch gekennzeichnet, dass** die Mittel zur Übertragung aufweisen:
- eine erste Nockenbahn (144A), die fest mit dem Ausgangsglied (82) verbunden ist und die eine Neigung (146A) aufweist;
- einen ersten Nockenfolger (136A), der der ersten Nockenbahn (144A) zugeordnet ist, wobei der genannte Nockenfolger (136A) den Ring (116A) des ersten Freilaufs (114A) in Drehung hin zu seiner anfänglichen Winkelstellung entgegen der elastischen Rückstellkraft versetzen kann;
- eine zweite Nockenbahn (144B), die fest mit dem Ausgangsglied (82) verbunden ist und die eine Neigung (146B) aufweist;
- einen zweiten Nockenfolger (136B), der der zweiten Nockenbahn (144B) zugeordnet ist, wobei der Nockenfolger (136B) den Ring (116B) des zweiten Freilaufs (114B) in Drehung hin zu seiner finalen Winkelstellung entgegen der elastischen Rückstellkraft versetzen kann.

7. Mechanismus (54) nach dem vorangehenden Anspruch, **dadurch gekennzeichnet, dass** jeder Nockenfolger durch einen Kipphebel (136A, 136B) gebildet wird.

8. Mechanismus (54) nach einem der vorangehenden Ansprüche, **dadurch gekennzeichnet, dass** mindestens einer der Freiläufe (114A, 114B) durch einen Freilauf mit Rolle (120A, 120B) gebildet wird.

9. Mechanismus (54) nach einem der Ansprüche 1 bis 7, **dadurch gekennzeichnet, dass** mindestens einer der Freiläufe (114A, 114B) durch einen Sperrklinken-Freilauf gebildet wird.

10. Mechanismus (54) nach einem der Ansprüche 4 bis 7, **dadurch gekennzeichnet, dass** die Betätigungsgabel (58) durch den Betätiger (78) über ein Ritzel (84) angetrieben wird, das dazu bestimmt ist, an einem Stutzen zur mechanischen Verbindung (86) des Ausgangsglieds (82) mit einem Winkelspiel (j) um seine Drehachse (A3) eingesteckt zu werden, sodass, entlang des zweiten Regelungs-Winkelwegs (C2), das Ausgangsglied (82) dreht, ohne das Ritzel (84) in Drehung zu versetzen.

## Claims

1. Actuation mechanism (54) for a friction clutch system (34) of a motor vehicle which comprises:
- an actuation fork (58) which is mounted to pivot about a transverse axis (A2) via a longitudinally mobile articulation (60) and which comprises two lever arms (74, 76), each of which has a fixed length;
- an actuator (78) which is intended to slide an actuation abutment (56) of the clutch system (34) via the actuation fork (58);
- a device (102) for taking up longitudinal play of the clutch (34), notably from the wear of friction linings, which acts on the longitudinal position of the articulation (60) of the actuation fork (58) via an adjustment member (108) mounted to rotate on a fixed support (62), to take up the longitudinal play;
**characterized in that** it comprises:
- a first free wheel (114A) which is mounted to rotate about the adjustment member (108), the first free wheel (114A) being capable of rotationally driving the adjustment member (108) only when it is turned in a first driving direction, from an initial angular position to a final angular position; and
- a second free wheel (114B) which is mounted to rotate about the adjustment member (108), the second free wheel (114B) being capable of rotationally driving the adjustment member (108) only when it is turned in a second driving direction opposite to said first driving direction, from an initial angular position to a final angular position;
- selective declutching means (134) for each free wheel (114A, 114B) to allow the free rotation of the adjustment member (108) in the two directions relative to said free wheel (114A, 114B) when this said free wheel (114A, 114B) occupies its initial angular position.

2. Mechanism (54) according to the preceding claim, **characterized in that** each free wheel (114A, 114B) comprises a peripheral ring (116A, 116B) and a link element (120A, 120B) for linking with the adjustment member (108), said link element (120A, 120B) being mobile relative to the associated ring (116A, 116B) between:
- a securing position in which the ring (116A, 116B) and the adjustment member (108) are secured in rotation in the driving direction and to which the link element (120A, 120B) is elastically returned,
- and a release position in which the ring (116A, 116B) is free to turn relative to the adjustment member (108) ;
and **in that** the declutching means comprise an abutment (134) that is fixed relative to the support (62) and which keeps the link element (120A, 120B) in its release position when the associated ring (116A, 116B) occupies its initial angular position.

3. Mechanism (54) according to the preceding claim, **characterized in that** the abutment (134) is common to the two free wheels (114A, 114B), and **in that** the first free wheel (114A) is elastically returned to its final angular position, whereas the second free wheel (114B) is elastically returned to its initial angular position.

4. Mechanism (54) according to the preceding claim, **characterized in that** the actuator (78) comprises an output member (82) which is mobile on a path which is divided into two non-overlapping courses:
- a first actuation course (C1) which makes it possible to act on the actuation abutment (56) to control the friction clutch (34), the actuation abutment (56) being elastically returned to an extreme position of rest corresponding to an original position (PO) of the output member (82);
- and a second adjustment course (C2) which prolongs the first course (C1) short of the original position (PO) of the output member (82) and along which the actuator (78) controls the take-up device (102) via motion transmission means without acting on the state of the clutch (34).

5. Mechanism (54) according to the preceding claim, **characterized in that** the second adjustment course (C2) is divided into a first portion of adjustment (C2+) in a first direction which extends from the original position (PO) to an intermediate position (PI) of the output member (82), and a second portion of adjustment (C2-) in a second direction which extends short of the intermediate position (PI),
and **in that** the first free wheel (114A) is controlled in rotation to its initial angular position against the elastic return force all along the second adjustment course (C2), the return of the output member (82) to its original position (PO) provoking the rotation of the first free wheel (114A) in the driving direction of the adjustment member (108) to slide the articulation (60) in a first direction,
whereas the second free wheel (114B) is controlled in rotation to its final angular position against the elastic return force on the second portion of adjustment (C2-), provoking the rotation of the second free wheel (114B) in the driving direction of the adjustment member (108) to slide the articulation (60) in a second direction.

6. Mechanism (54) according to the preceding claim, **characterized in that** the transmission means comprise:
- a first cam path (144A) which is secured to the output member (82) and which comprises a slope (146A);
- a first cam follower (136A) which is associated with the first cam path (144A), said cam follower (136A) being capable of turning the ring (116A) of the first free wheel (114A) in rotation to its initial angular position against the elastic return force;
- a second cam path (144B) which is secured to the output member (82) and which comprises a slope (146B);
- a second cam follower (136B) which is associated with the second cam path (144B), the cam follower (136B) being capable of turning the ring (116B) of the second free wheel (114B) in rotation to its final angular position against the elastic return force.

7. Mechanism (54) according to the preceding claim, **characterized in that** each cam follower is formed by a rocker arm (136A, 136B).

8. Mechanism (54) according to any one of the preceding claims, **characterized in that** at least one of the free wheels (114A, 114B) is formed by a roller free wheel (120A, 120B).

9. Mechanism (54) according to any one of Claims 1 to 7, **characterized in that** at least one of the free wheels (114A, 114B) is formed by a ratchet free wheel.

10. Mechanism (54) according to any one of Claims 4 to 7, **characterized in that** the actuation fork (58) is driven by the actuator (78) via a pinion (84) which is intended to be fitted together with a mechanical connection end-fitting (86) of the output member (82) with an angular play (j) about its axis of rotation (A3) such that, along the second angular adjustment course (C2), the output member (82) turns without rotationally driving the pinion (84).
